**Europäisches Patentamt**

**European Patent Office**

**Office européen des brevets**

(19)

(11) Numéro de publication : **0 481 859 A1**

## (12) DEMANDE DE BREVET EUROPEEN

(21) Numéro de dépôt : **91402725.5**

(22) Date de dépôt : **11.10.91**

(51) Int. Cl.⁵ : **G06F 15/72,** G09G 3/20

(30) Priorité : **16.10.90 FR 9012738**

(43) Date de publication de la demande :
**22.04.92 Bulletin 92/17**

(84) Etats contractants désignés :
**DE GB IT NL**

(71) Demandeur : **SEXTANT Avionique**
**5,7, rue Jeanne Braconnier Parc tertiaire**
**F-92360 Meudon-la-Forêt (FR)**

(72) Inventeur : **Soubrier, Jean-Marie**
**THOMSON-CSF, SCPI, Cédex 67**
**F-92045 Paris la Défense (FR)**

(74) Mandataire : **Courtellemont, Alain et al**
**THOMSON-CSF SCPI**
**F-92045 PARIS LA DEFENSE CEDEX 67 (FR)**

(54) **Procédé de coloriage sur un écran à matrice de points.**

(57)    L'invention concerne le coloriage, selon une couleur donnée, d'une zone d'une figure, et en particulier d'une figure en déplacement, sur un écran à matrice de points.

Seul le contour (C) de la zone est mis en mémoire et sa position est calculée en fonction du déplacement de la figure ; ensuite le coloriage est effectué par un balayage ligne par ligne de l'écran, avec détection du contour afin de colorier les segments de lignes de pixels contenus à l'intérieur du contour.

Application à l'affichage sur écran à matrice de points.

FIG.6

La présente invention concerne le coloriage sur un écran à matrice de points du genre, par exemple, des écrans matriciels de visualisation à cristaux liquides (LCD ou liquid-crystal display dans la littérature anglo-saxonne) ou à diodes électroluminescentes (Light-emitting diode ou LED dans la littérature anglo-saxonne).

Dans certaines applications de ces écrans matriciels il faut colorier des zones de figures en déplacement sur l'écran ; chaque zone est à colorier d'une couleur donnée.

Pour effectuer le coloriage d'une zone en mouvement il est connu de considérer que, dans la position de départ, la zone est coloriée par des traits parallèles ; la position de chacun de ces traits est ensuite calculée en fonction du déplacement à effectuer. Il en résulte de nombreux calculs car, afin d'éviter les altérations du dessin, il faut, en particulier, des calculs précis pour éviter les formes imprécises, un traitement des arrondis de calcul pour éviter les "marches d'escalier" non régulières, les trous dans le coloriage, les couleurs incertaines, une correction des contours. Ces nombreux calculs nécessitent un micro-ordinateur puissant et donc onéreux et consommateur d'énergie.

L'invention a pour but d'éviter ces inconvénients. Ceci est obtenu, en particulier, par un marquage du contour de la zone à colorier et par un balayage systématique et successif des portions de lignes de la matrice situées à l'intérieur de ce contour, afin d'en allumer les pixels selon la couleur désirée pour la zone.

Selon l'invention, il est proposé un procédé de coloriage sur un écran à matrice de points, c'est-à-dire dont la matrice est faite de lignes et de colonnes de pixels, caractérisé en ce que, pour colorier une zone, il consiste à dessiner le contour de la zone sur l'écran à l'aide de pixels allumés selon une premier couleur donnée, à effectuer un balayage de la zone le long de segments de droites parallèles équidistantes, ces droites étant constituées par des lignes de pixels de l'écran qui coupent le contour en deux points de coupure différents et ces segments étant constitués par la partie de ces droites comprise entre les deux points de coupure, et à colorier, au fur et à mesure du balayage, les pixels des segments selon une seconde couleur donnée.

L'invention sera mieux comprise et d'autres caractéristiques apparaîtront à l'aide de la description ci-après et des figures s'y rapportant qui concernent :

– les figures 1 et 2, des représentations schématiques d'un coloriage selon l'art antérieur,
– les figures 3 et 4, des représentations schématiques d'un coloriage selon l'invention,
– la figure 5, un organigramme pour la mise en oeuvre du procédé selon l'invention,
– les figures 6 à 11 des schémas montrant comment s'effectue sur un écran matriciel un coloriage selon l'invention.

Dans ce qui suit et dans les revendications il est question d'écrans matriciels faits de lignes et de colonnes de pixels. Ce terme de pixel, qui est plus couramment employé que celui d'élément d'image, est à prendre ici dans sa signification la plus large, c'est-à-dire qu'il représente un groupement de points élémentaires nécessaires à l'obtention d'une couleur, cette couleur pouvant, éventuellement, être une couleur avec teinte de gris ; ainsi lorsqu'un écran matriciel comporte quatre types différents de points élémentaires de couleur (le point est aussi appelé dot en français, d'après sa dénomination dans la littérature anglo-saxonne), par exemple des points rouges, verts, bleus et blancs, régulièrement disposés en trétrades comportant un point de chaque type et que, pour obtenir un rouge avec teinte de gris, seul un dot rouge est allumé pour quatre tétrades voisines, alors un pixel sera considéré comme étant fait de quatre tétrades soit seize dots ; de même, pour un écran matriciel noir et blanc, le pixel se réduira en fait à un seul point élémentaire, à moins que, pour obtenir des teintes de gris, seul, par exemple, un point élémentaire sur deux soit allumé, dans ce cas le terme pixel désignera un groupement de deux joints élémentaires.

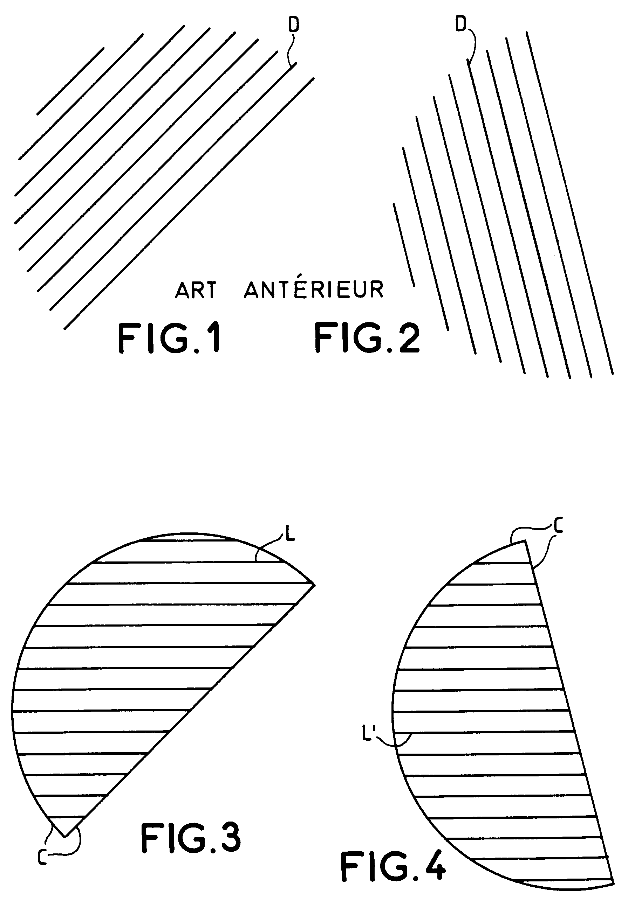

Les figures 1 à 4 montrent comment des alignements de pixels sont allumés sur un écran matriciel pour déterminer une couleur donnée à l'intérieur d'une zone constituée par un demi-cercle. Sur ces figures, à part un contour C dans les figures 3 et 4, les alignements sont constitués jar des segments de droites parallèles ; pour la compréhension du dessin l'écart entre ces segments est important, dans la réalité il sera en général nul pour l'oeil d'un observateur.

Les figures 1 et 2 se rapportent à l'art antérieur, les figures 3 et 4 à l'invention. Les figures 1 et 3 montrent le demi-cercle dans une position d'origine et les figures 2 et 4 ce même demi-cercle après qu'il se soit déplacé sur l'écran dans un mouvement composé d'une translation et d'une rotation.

Dans le cas des figures 1 et 2 la zone en demi-cercle est coloriée à l'aide de segments, tels que le segment D, qui sont toujours parallèles au diamètre qui limite le demi-cercle. Le passage de la figure 1 à la figure 2 se fait en calculant, pour chacun de ces segments, les coordonnées de ses pixels à partir de la position d'origine du segment, c'est-à-dire à partir de la position selon la figure 1, et en fonction du vecteur translation et de l'angle de rotation qui définissent le déplacement. Il est facile d'imaginer que la mise en mémoire de tous les segments d'origine nécessite une place importante en mémoire et que les calculs pour passer de la figure 1 à la figure 2 en préservent une bonne qualité d'image, sont nombreux et nécessitent un micro-ordinateur puissant.

Dans le cas des figures 3 et 4 le contour C de la zone en demi-cercle est dessiné par un alignement de pixels et cet alignement est dessiné en continu, c'est-à-dire qu'à chaque passage du contour par une ligne ou une colonne de la matrice de l'écran, le contour comporte au moins un pixel allumé dans cette ligne ou cette colonne, au niveau de l'endroit où se fait le passage. Dans le dessin qui sert d'exemple à la présente description, le support est constitué par un écran matriciel de 480 x 480 points élémentaires ; les pixels considérés sont des pixels comportant quatre points en carré, respectivement rouge, vert, bleu et blanc ; et le contour C est dessiné en blanc par allumage des quatre points élémentaires des pixels ; une telle couleur de contour est intéressante car elle souligne le contour, évite l'irrisation sur les bords et n'altère pas les couleurs de coloriage. L'intérieur du contour est colorié, en rouge dans l'exemple décrit, par un balayage ligne par ligne ; le balayage est arrêté aux bords du contour, par détection du pixel blanc de droite et du pixel blanc de gauche rencontrés lors de ce balayage ; chaque pixel rencontré lors de ce balayage est allumé en rouge.

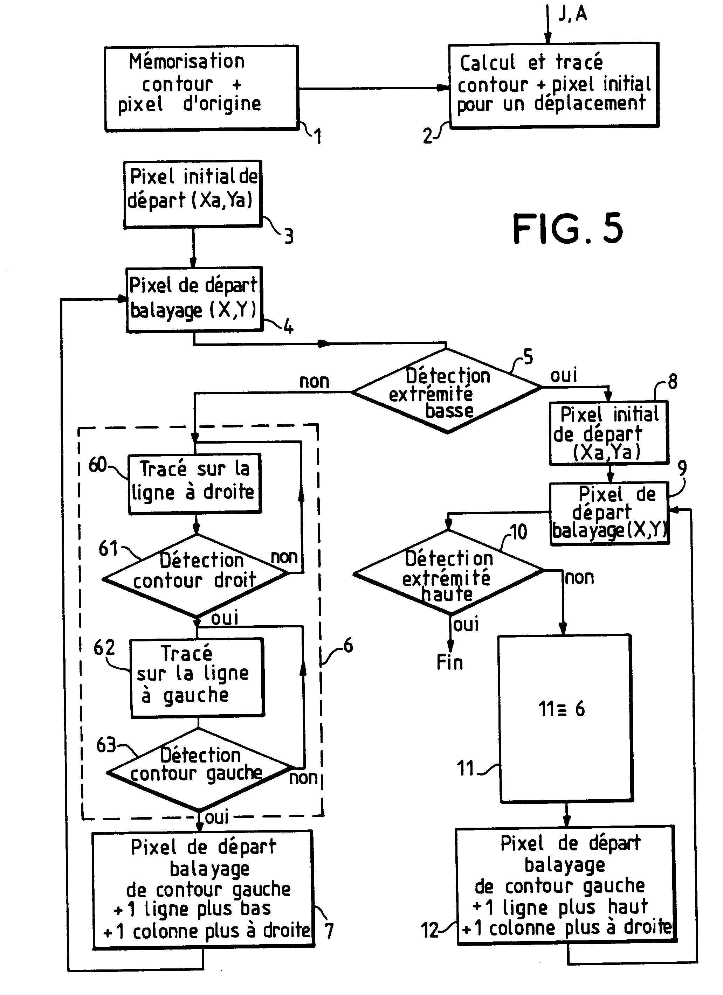

Ainsi, dans le coloriage selon les figures 3 et 4, seule un contour initial est à garder en mémoire, les autres contours sont à calculer avec précision en fonction du déplacement à obtenir ; quand un nouveau contour, C, est dessiné, son intérieur est colorié de la manière indiquée ci-avant et reprise plus en détail à l'aide des figures 5 et suivantes.

En ce qui concerne le contour initial, une façon simple de l'obtenir consiste à le tracer à la main et à noter la position des différents pixels à allumer dans une mémoire vidéo à accès aléatoire appelée mémoire VRAM (initiales des mots anglais video random access memory).

Pour certains coloriages une partie des limites des zones à colorier est fixe, tandis que l'autre est mobile ; c'est, par exemple, le cas d'une figuration d'un horizon artificiel qui sert à visualiser, dans un avion, l'attitude de l'avion par rapport au sol, et où, généralement, un cercle fixe est traversé par un segment de droite variable en rotation et en translation ; le segment de droite représente l'horizon avec, de part et d'autre deux, couleurs différentes : bleue pour le ciel et marron ou rouge pour la terre ; les deux contours relalatifs a ces deux coloriages sont donc constitués chacun par une partie du cercle fixe et le segment de droite mobile ; ainsi seul le segment de droite mobile est à calculer par une détermination exacte de ses deux extrémités qui doivent être deux points du cercle et il suffit alors de relier ces deux points par une droite.

La figure 5 est un organigramme montrant les différentes phases du procédé qui permet d'effectuer le coloriage, selon l'invention, d'une zone d'un écran matriciel. Le procédé débute, après l'effacement de l'image précédente, par la restitution du contour d'origine mis en mémoire : bloc 1 de l'organigramme ; en même temps que ce contour la position d'un pixel, appelé pixel d'origine et qui est situé dans la zone à l'intérieur du contour, est mise en mémoire ; le rôle exact de ce pixel apparaîtra dans ce qui suit. En fonction d'un déplacement défini par un vecteur J et un angle de rotation A, les coordonnées d'un nouveau contour sont calculées, ce contour est tracé sur l'écran et les nouvelles coordonnées $(X_a, Y_a)$ du pixel d'origine sont calculées pour former ce qui sera appelé un pixel initial de départ : bloc 2.

A partir de là, le coloriage de la zone comprise dans le contour qui vient d'être tracé peut commencer.

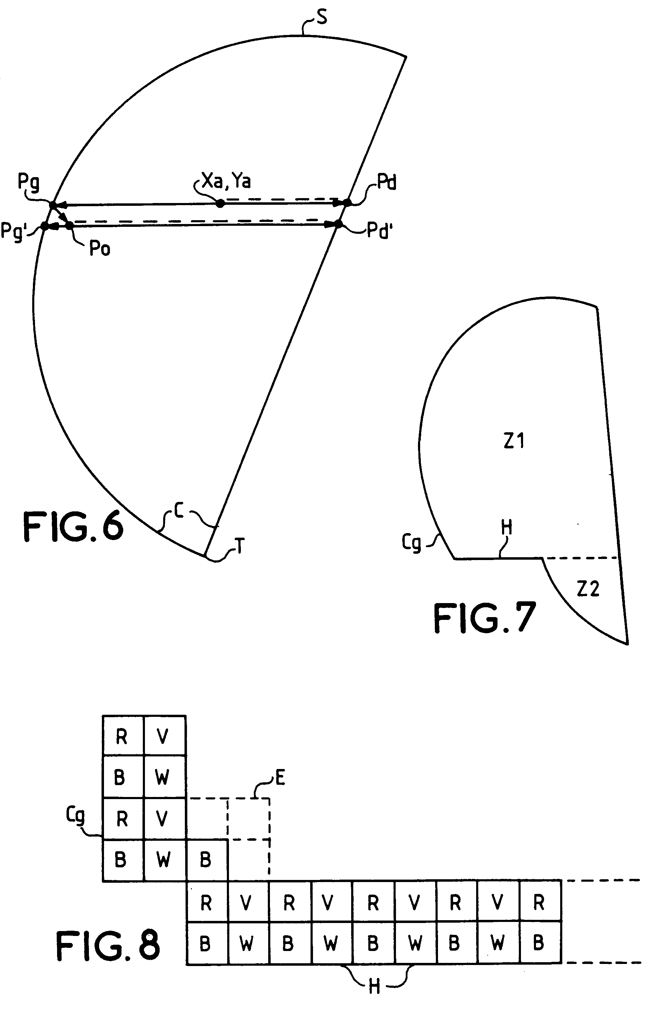

Comme représenté sur la figure 6, le coloriage commence au pixel initial de départ $(X_a, Y_a)$, par un balayage vers la droite de tous les pixels de la ligne $Y_a$ rencontrés jusqu'à ce que soit détecté un pixel $P_d$ du contour C, c'est-à-dire un pixel de quatre points élémentaires rouge, vert, bleu, blanc qui sont tous allumés alors que les pixels précédemment rencontrés étaient tous éteints et, au fur et à mesure qu'ils étaient rencontrés, étaient allumés en rouge. Le balayage continue sur la ligne $Y_a$, après la détection du pixel $P_d$, mais vers la gauche et jusqu'à ce que soit détecté un pixel $P_g$ du contour C ; dans ce balayage les pixels rencontrés sur la ligne $Y_a$ et qui n'étaient pas allumés, sont allumés en rouge.

Arrivé au pixel $P_g$ le balayage reprend à la ligne inférieure, $Y_a-1$, avec, comme pixel de départ, le pixel $P_o$ situé dans la colonne juste à droite de la colonne où se trouve le pixel $P_g$. Même si ce pixel de départ, $P_o$, est un pixel du contour, le balayage se fait vers la droite jusqu'au premier pixel, $P_d'$, de contour rencontré ; puis le balayage revient vers la gauche, jusqu'à rencontrer un pixel de contour, $P_g'$. Ce balayage ligne par ligne vers le bas de l'écran, est interrompu lorsque le balayage d'une ligne n'a dectecté, au plus, qu'un point blanc ; c'est le critère qui permet de considérer que le balayage est arrivé à l'extrémité basse T du contour C. Commence alors un balayage ligne par ligne vers le haut de l'écran à partir du pixel initial de départ $(X_a, Y_a)$ de la même façon que s'était produit le balayage vers le bas mais cette fois, évidemment, avec des pixels de départ de balayage ligne décalés d'une ligne vers le haut après chaque balayage vers la droite puis vers la gauche d'une ligne ; et le balayage ligne par ligne est interrompu sur reconnaissance de l'extrémité haute, S, du contour C par détection d'au plus un point blanc au cours du balayage d'une ligne; le coloriage en rouge de la zone est alors terminé ; éventuellement les pixels du contour peuvent alors être éteints.

Dans l'organigramme selon la figure 5, les différentes étapes qui viennent d'être décrites et qui permettent le coloriage à l'intérieur d'un contour comme le contour C de la figure 6, ont été représentées par un algorithme fait de blocs numérotés de 3 à 12, le bloc 6 comportant lui-même quatre blocs numérotés de 60 à 63.

Le balayage commence -blocs 3, 4- au pixel dont les coordonnées (X, Y) sont celles du pixel initial de départ (Xa, Ya). En choisissant le pixel (Xa, Ya) à l'intérieur du contour et non pas dans le contour, une détection d'extrémité basse de contour -bloc 5- s'avère négative. Le balayage ligne avec tracé en couleur commence vers la droite de la ligne Ya -bloc 60- jusqu'à la détection du contour de droite -bloc 61-. Le balayage ligne avec tracé en couleur reprend alors vers la gauche -bloc 62- jusqu'à la détection du contour de gauche ; il est à noter que, pour diminuer le temps du coloriage, ce balayage vers la gauche peut s'effectuer à partir du pixel (Xa, Ya) au lieu de commencer à partir du pixel de contour droit qui vient d'être détecté. Le pixel dont les coordonnées correspondent au pixel de contour gauche, qui vient d'être détecté, décalé d'une ligne vers le bas et d'une colonne vers la droite, est déterminé -bloc 7- et sert de pixel de départ -bloc 4- pour la ligne Ya+1.

A moins que ce nouveau pixel de départ soit à l'extrémité basse du contour -bloc 5- le balayage reprend, à la ligne Ya + 1, comme pour la ligne Ya - bloc 6- et ainsi de suite aux lignes Ya+2, Ya+3,... jusqu'à détection de l'extrémité basse du contour. Le second balayage ligne par ligne va alors pouvoir commencer avec, comme pixel de départ de balayage (X, Y) -bloc 9-, le pixel initial de départ (Xa, Ya) -bloc 8-. Une détection d'extrémité haute de contour -bloc 10- sur ce pixel initial, va là aussi s'avérer négative, si le pixel (Xa, Ya) n'a pas été choisi sur le contour mais à l'intérieur du contour. Le balayage ligne par ligne commence alors pour les lignes Ya, Ya-1, Ya-2..., selon les blocs 11 et 12, le bloc 11 est identique au bloc 6 et le bloc 12 est semblable au bloc 7 mais comporte un décalage d'une ligne vers le haut et non vers le bas ; ce balayage s'arrête lorsqu'est détectée -bloc 10- l'extrémité haute du contour. L'opération de coloriage est alors terminée.

Dans le cas où, comme dans l'exemple de la figure 7, un élément du contour est constitué par un segment horizontal H et qu'une partie Z2 de l'ensemble Z1 + Z2 de la zone à colorier se trouve à droite et en dessous de ce segment H, le critère de reconnaissance d'une extrémité par détection d'au plus un point blanc au cours du balayage d'une ligne, ne permet pas de colorier toute la zone comprise dans le contour, du moins si le pixel de départ a été pris dans la zone Z1. En effet dans ce cas, après le balayage de la ligne précédente qui s'arrête sur un pixel de la partie gauche du contour, le pixel de départ du balayage de la ligne contenant le segment H va se trouver à l'extrémité gauche du segment H ; le balayage vers la droite va donc, dès le début détecter la présence de pixels de contour, c'est-à-dire de pixels où les quatre points élémentaires rouge B, vert V, bleu B et blanc W, sont allumés et cette détection va être interprétée comme la rencontre de l'extrémité inférieure.

Pour éviter cela et donc pour éviter que la zone Z2 ne soit pas coloriée, il est possible d'effectuer un second balayage ligne par ligne à partir d'un second pixel initial de départ qui, lui, sera situé dans la zone Z2 ; de préférence, le second balayage ligne par ligne sera arrêté juste avant d'arriver dans la zone Z1 qui aura déjà été coloriée lors du premier balayage ; il est aussi possible, dans le cas de la figure 7, de colorier l'ensemble des zones Z1 et Z2 en choisissant un seul pixel initial de départ mais en le prenant dans la zone Z2. Une autre possibilité, pour éviter que la zone Z2 selon la figure 7 ne soit pas coloriée, est illustrée par la figure 8 ; un pixel codé, E, est disposé contre le contour de gauche, Cg, dans la ligne juste au-dessus de la ligne contenant le segment H ; ce pixel est codé par allumage de son point bleu B, alors que, dans l'exemple décrit, le contour est fait de pixels dont les quatre points sont allumés et que les pixels à l'intérieur du contour doivent être allumés en rouge ; ce pixel codé n'empêchera pas que le balayage vers la gauche se poursuive jusqu'au pixel, Cg, de contour et que le pixel de départ de la ligne contenant le segment H soit obtenu, comme indiqué précédemment, par un décalage d'une ligne vers le bas et d'un pixel vers la droite ; par contre, du fait de la détection du pixel codé, E, à la ligne précédente, le balayage vers la droite de la ligne contenant le segment H attendra, avant de s'arrêter sur un pixel de contour, d'avoir rencontré au moins un pixel à colorier, c'est-à-dire un pixel dont les quatre points seront éteints.

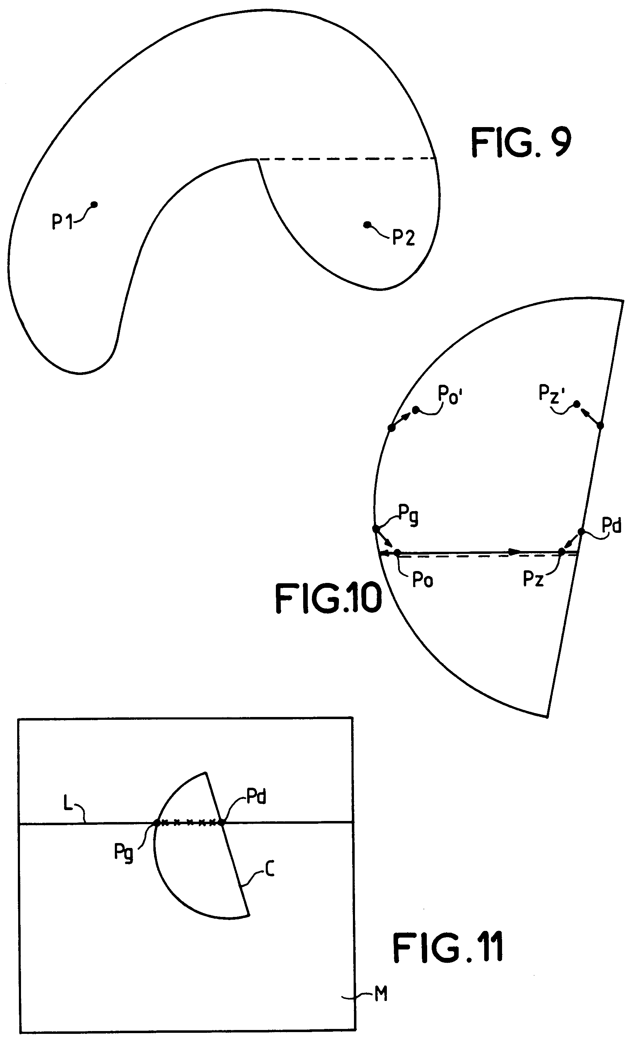

Pour des contours plus compliqués que ceux des figures 3, 4, 6 et 7, tels le contour selon la figure 9, le coloriage nécessitera plusieurs pixels initiaux de départ correctement choisis dans la zone à colorier ; ainsi dans le cas de la figure 9 où deux pixels initiaux de départ, P1 et P2, ont été choisis, le coloriage peut se faire en deux fois, à partir du bloc 3 de la figure 5 : une première fois à partir du pixel P1 et une deuxième fois à partir du pixel P2 ; et, éventuellement, l'organigramme selon la figure 5 peut être modifié pour arrêter le coloriage effectué à partir de P2, à l'endroit représenté en traits interrompus où s'est arrêté le coloriage effectué à partir de P1, la condition étant la détection, lors du balayage d'une ligne vers la droite, d'un pixel déjà allumé.

D'autres variantes au procédé de coloriage selon l'invention sont possibles ; deux de ces variantes sont décrites à l'aide des figures 10 et 11.

Dans le cas de la figure 10 le balayage se fait toujours ligne par ligne à partir d'un point initial de départ et, quand une ligne a été balayée entre deux pixels d'un même contour, l'un à gauche Pg et l'autre à droite Pd, le balayage de la ligne du dessous se fait à partir d'un pixel de départ Po décalé d'une ligne au-dessous et d'un pixel vers la droite (comme dans les exemples précédents) ; par contre le balayage vers la droite n'est arrêté, au plus tôt, que par le pixel Pz qui se trouve une ligne au-dessous et une colonne à gauche du pixel Pd et il n'y a arrêt du balayage que si le pixel Pz est un pixel de contour sinon le balayage vers la droite se continue jusqu'à la rencontre d'un pixel du contour ; le balayage ligne par ligne, vers le haut du contour, s'effectue de manière semblable à partir de pixels de départ, tels le pixel Po', décalés d'une ligne vers le haut et d'une colonne vers la droite par rapport au pixel de contour gauche de la ligne précédente, et ce balayage se poursuit au moins jusqu'au pixel Pz' décalé d'une ligne vers le haut et d'une colonne vers la gauche par rapport au pixel de contour droit de la ligne précédente. Ce procédé permet de colorier les zones Z1 et Z2 selon la figure 7 en faisant partir le balayage d'un pixel initial de départ situé dans la zone Z1.

La figure 11 représente un écran matriciel M, sur lequel a été dessiné, à l'aide de pixels allumés selon une première couleur, un contour C. Le coloriage selon une deuxième couleur de la zone comprise à l'intérieur de ce contour se fait par un balayage de lignes complètes de l'écran et seuls sont allumés les pixels de la ligne, L, considérée, qui sont situés entre deux pixels Pg, Pd du contour. Le balayage peut être un balayage systématique de tout l'écran ou commencer en un point de la zone à colorier et s'étendre vers le bas puis vers le haut, ou inversement, jusqu'à atteindre les extrémités inférieure et supérieure du contour qui sont reconnues au fait qu'aucun pixel non allumé sépare les pixels de contour détectés lors du balayage d'une ligne.

La présente invention n'est pas limitée aux exemples décrits ; c'est ainsi, en particulier, que les balayages de lignes d'abord vers la droite puis vers la gauche, peuvent être effectués dans le sens inverse, les pixels de départ seront alors déterminés par référence au contour de droite ; de même le coloriage en lignes successives, à partir d'un pixel initial de départ, peut s'effectuer d'abord vers le haut puis vers le bas. De même le second balayage en lignes successives peut commencer une ligne plus loin que le premier et, par exemple dans le cas de la figure 6, au pixel juste au-dessus du pixel initial de départ (Xa, Ya), c'est-à-dire au pixel (Xa, Ya + 1). Le balayage au lieu d'être horizontal peut être vertical, cela revenant, dans les figures et les explications dont il a été question ci-avant, à faire tourner les écrans de 90 degrés et, à considérer que le balayage en lignes est un balayage vertical.

Il est également possible de tracer le contour dans la même couleur que la couleur à obtenir à l'intérieur de la zone ; il faut, pour cela, tenir compte des pixels allumés lors du balayage à droite d'une ligne et ne pas les considérer comme des pixels de contour lors du balayage à gauche ; de même pour la ligne du pixel initial de départ (Xa, Ya) il faut, lors d'un second balayage ligne par ligne effectué vers le haut, tenir compte de ce que cette ligne a déjà été coloriée lors d'un premier balayage ligne par ligne effectué vers le bas à partir du pixel initial de départ, du moins lorsque le coloriage s'effectue vers le bas puis vers le haut à partir d'un même pixel.

Le procédé permet également, après avoir colorié une zone d'une première couleur donnée, d'y tracer un contour à l'intérieur duquel la première couleur donnée sera remplacée par une seconde couleur donnée.

**Revendications**

1. Procédé de coloriage sur un écran à matrice de points, c'est-à-dire dont la matrice est faite de lignes et de colonnes de pixels, caractérisé en ce que, pour colorier une zone, il consiste à dessiner le contour (C) de la zone sur l'écran à l'aide de pixels allumés selon une premier couleur donnée, à effectuer un balayage de la zone le long de segments de droites parallèles équidistantes, ces droites étant constituées par des lignes de pixels de l'écran qui coupent le contour en deux points de coupure différents (Pg, Pd) et ces segments étant constitués par la partie de ces droites comprise entre les deux points de coupure, et à colorier, au fur et à mesure du balayage, les pixels des segments selon une seconde couleur donnée.

2. Procédé selon la revendication 1, caractérisé en ce qu'il consiste à commencer le balayage à partir d'un pixel initial (Xa, Ya) situé sur un des segments, à balayer ce segment dans un sens donné jusqu'à avoir détecté l'un des deux points de coupure entre lesquels est compris ce segment, puis à balayer dans le sens opposé au sens donné jusqu'à avoir détecté l'autre point de coupure et à balayer, dans un balayage par lignes successives de pixels, de la même façon, les autres segments situés d'un premier côté du segment comportant le pixel initial, puis les autres segments situés d'un second côté du segment comportant le pixel initial, le pixel (Po) à partir duquel doit se faire le balayage d'un des autres segments étant déterminé par une translation à partir du pixel de l'autre point de coupure de celui des segments qui a déjà été balayé et qui est le plus proche du segment à balayer, la translation à partir du pixel consistant en un décalage d'une ligne plus loin, vu lu pixel initial, et en un décalage d'une colonne dans la direction donnée.

3. Procédé selon la revendication 2, caractérisé en ce que le balayage des autres segments situés d'un second côté du segment comportant le pixel initial (Xa, Ya) commence dès qui est balayé un segment situé du premier côté du segment comportant le pixel donné et que ce segment balayé comporte moins de deux pixels.

4. Procédé selon la revendication 1, caractérisé en ce que la première et la seconde couleur donnée sont distinctes l'une de l'autre.

5. Procédé selon la revendication 1, caractérisé en ce qu'il consiste à effectuer le balayage des segments au cours d'un balayage complet de chacune des lignes de pixels de l'écran qui contiennent ces segments.

ART ANTÉRIEUR

FIG.1    FIG.2

FIG.3

FIG.4

J, A

| Mémorisation contour + pixel d'origine | Calcul et tracé contour + pixel initial pour un déplacement |

1     2

Pixel initial de départ (Xa, Ya)

3

# FIG. 5

Pixel de départ balayage (X, Y)

4

Détection extrémité basse    non    oui   5

8 Pixel initial de départ (Xa, Ya)

9 Pixel de départ balayage (X, Y)

60 Tracé sur la ligne à droite

61 Détection contour droit   non

oui

62 Tracé sur la ligne à gauche

6

63 Détection contour gauche   non

oui

Détection extrémité haute    non   10

oui

Fin

11 ≡ 6

11

Pixel de départ balayage de contour gauche +1 ligne plus bas +1 colonne plus à droite   7

Pixel de départ balayage de contour gauche +1 ligne plus haut +1 colonne plus à droite

12

**FIG.6**

**FIG.7**

**FIG.8**

FIG. 9

P1

P2

Po'

Pz'

Pg

Pd

Po

Pz

FIG.10

L

Pd

Pg

C

M

FIG.11

10

**Office européen des brevets**

# RAPPORT DE RECHERCHE EUROPEENNE

Numero de la demande

EP    91 40 2725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | IEEE TRANSACTIONS ON COMPUTERS vol. C-30, no. 1, Janvier 1981, NEW YORK, US pages 41 - 48; B.D. ACKLAND ET AL: 'The edge flag algorithm - a fill method for raster scan displays' * page 42, colonne 1 - colonne 2 * | 1,4,5 | G06F15/72 G09G3/20 |
| Y | US-A-4 574 315 (M. YOSHIMURA ET AL.) * colonne 1, ligne 11 - ligne 24 * | 1 | |
| Y | EP-A-0 073 338 (IBM) * page 1, dernier alinéa - page 2, alinéa 1 * | 4 | |
| A | G. HEGRON 'Synthèse d'image: Algorithmes élémentaires' 1985 , DUNOD INFORMATIQUES , PARIS, FR * page 68, alinéa 4 * * page 70 - page 72: "L'algorithme de Smith" * | 1-3 | |
| Y | EP-A-0 184 419 (IBM) * abrégé; revendication 1 * | 1 | **DOMAINES TECHNIQUES RECHERCHES (Int. Cl.5)** |
| Y | US-A-4 897 805 (J. WANG) * colonne 1, ligne 5 - ligne 42; figure 1 * | 5 | G06F G09G |

-----

Le présent rapport a été établi pour toutes les revendications

| Lieu de la recherche | Date d'achèvement de la recherche | Examinateur |
|---|---|---|
| LA HAYE | 29 JANVIER 1992 | ZENDER J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)